# EUROPEAN PATENT APPLICATION

(11) **EP 3 130 218 A1**
(43) Date of publication of application: **15.02.2017**
(21) Application number: 16182829.8
(22) Date of filing: 04.08.2016
(51) Int. Cl.: A01G 9/10

(54) **CULTURE MEDIUM FOR THE CULTIVATION OF PLANTS**

(30) Priority: 12.08.2015 NL 2015296
(71) Applicant: Smithers-Oasis Company, Kent, OH 44240 (US)
(72) Inventor: Langezaal, Lucas Everhardus Maria, 04760 Berja-Almeria (ES)
(74) Representative: Vernout, Robert

(57) **Abstract**

A culture medium for the cultivation of plants, wherein the culture medium comprises a container which is open at the top and which is filled or is arranged to be filled with a growth substrate, wherein the container is made of fibers and/or granules which are interconnected by means of an adhesive, and the growth substrate is a loose material, such as soil or peat.

## Description

The invention relates to a culture medium for the cultivation of plants, wherein the culture medium comprises a container which is open at the top and which is filled or is arranged to be filled with a growth substrate. The culture medium is filled with the growth substrate and a plant or a plant seed. The growth substrate may be a loose material, such as soil or peat.

Such a culture medium is known, for instance in the form of a plastic or paper pot filled with soil or peat.

For growing young plants, apart form said pots, also other types of growth substrates (a.k.a. "plant plugs") are used. Plugs made of glued fibers, such as described in WO 2007/011225 A2, are popular because the plug with the rooted plant can easily be removed, often by a machine, from a tray without damaging the young roots. In the growth tray the roots often grow through the plug and fill the gap between the tray wall and the plug itself because in that zone water is present as well as air, and this is in fact the optimal growth place. Also paper pots or plastic meshes are known, filled with loose soil or peat. Also in this case the roots often grow through the substrate and the thin paper or through the mesh, and grow in the air and water filled space. In that manner often a layer of roots grows outside the plug, pot or mesh, which suffocate itself and eventually consist of suberized roots. When re-planting this layer hinders rapid growth of new roots to the new growth medium. In case of thin paper pots or plastic meshes, the thin shell offers little stability, so that the plug cannot be filled with very loose soil or peat.

The goal of the invention is to offer an improved cultivation medium.

According to the invention the container is made of fibers and/or granules which are interconnected by means of an adhesive. In this manner the container provides a buffer, with water absorption capacity and air volume for the roots to grow into, after growing out of the growth substrate inside the container. Also, even under wet condition, the container remains sufficiently firm in order to be processed by machines, which move them in and out of trays, even when filled with very loose soil or peat. The method of bonding the fibers and/or granules, and the adhesive to be used, may be as described in WO 2007/011225, which is incorporated herein by reference.

In the preferred embodiment the container comprises a circumferential side wall, preferably a frusto-conical side wall, and the container comprises a bottom connected to the side wall. The ration between the adhesive and fibers and/or granules is such that the container is air and water permeable. The thickness of the side wall of the container is preferably between 1.5 mm and 20 mm, depending on the size of the container (the diameter of which generally ranges from 20 mm to 15 cm). Preferably the thickness of the side wall of the container is between 10 mm and 20 mm, such that roots of the plant can grow into the wall structure.

The fibers and/or granules may be made of an anorganic material, but in the preferred embodiment the fibers and/or granules are made of an organic material. The fibers and/or granules may comprise cellulose fibres, pressed carton granules, peat fibers, wood fibers or bark granules, preferably pine bark granules. More preferably the fibers and/or granules are comprised of a material of a type which does not soften when soaked in water, such as pressed carton granules, wood fibers, coconut fibers or bark granules, preferably pine bark granules. Thereby the culture medium maintains its integrity and can be handled with ease, also once it is soaked with water. The loose material may be comprised of the same sort of fibres and/or granules of which the container is made.

Preferably the fibers and/or granules have an average length of between 1 mm and 50 mm. The fibers and/or granules may for instance have an average length of between 1 mm and 5 mm, between 5 mm and 35 mm, or between 20 mm and 50 mm. The fibers and/or granules preferably have an average width of between 1 mm and 4 mm. Fine, tiny fibers, between 1 and 5 mm give a dense but elastic container wall with small pores. Fibers with a length of 5 to 35 mm to give a more open but firm container wall with both fine and coarse pores. To create large containers larger fibers can be chosen from 20 mm to 50 mm. The diameter of the fibers ranges from 1 to 4 mm.

The invention will be elucidated by way of a preferred embodiment, with reference to the figures, in which:

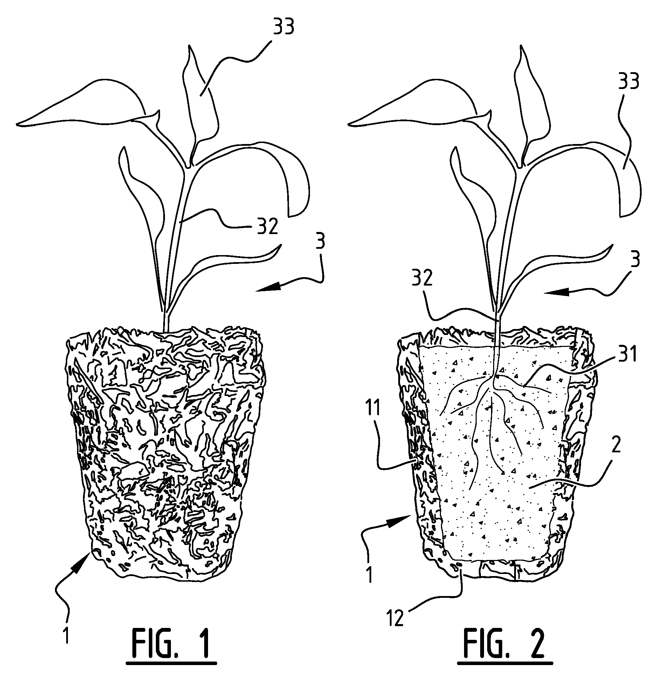

Figure 1 shows a front view of a culture medium in accordance with the invention; and
Figure 2 shows a cross sectional view of the culture medium of figure 1.

According to the figures, a culture medium for the cultivation of plants comprises a container 1filled with a growth substrate 2, such as loose peat. A young plant 3 is grown in the culture medium, for instance by putting a seed in the growth substrate 2, putting the culture medium in a growth tray (for instance by a pick-and-place machine), and providing water to the culture medium, such that roots 31 and a stem 32 and leaves 33 develop from the seed. Once the plant is grown big enough, the culture medium is re-planted to a bigger size pot for instance, which may again be doen by a pick-and-place machine.

The container 1 is open at the top and comprises a frusto-conical circumferential side wall 11, with it widest circumference on top, and a bottom 12 integrated therewith. The container 11 is made of organic fibers and/or granules, such as a mixture of wood fibers and pine bark granules, which are bonded together by means of a binder, such as a thermoplastic polymer, in such a manner that the container wall is air and water permeable, as well as water absorbent.

The invention has thus been described by means of a preferred embodiment. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein.

## Claims

1. A culture medium for the cultivation of plants, wherein the culture medium comprises a container which is open at the top and which is filled or is arranged to be filled with a growth substrate, **characterized in that** the container is made of fibers and/or granules which are interconnected by means of an adhesive.

2. The culture medium of claim 1, wherein the container comprises a circumferential side wall, preferably a frusto-conical side wall.

3. The culture medium of claim 2, wherein the container comprises a bottom connected to the side wall.

4. The culture medium of claim 1, 2 or 3, wherein the container is air and water permeable.

5. The culture medium any of the previous claims, wherein the fibers and/or granules are made of an anorganic material.

6. The culture medium any of the previous claims, wherein the fibers and/or granules are made of an organic material.

7. The culture medium of claim 6, wherein the fibers and/or granules comprise cellulose fibres, pressed carton granules, peat fibers, wood fibers or bark granules, preferably pine bark granules.

8. The culture medium of any of the previous claims, wherein the fibers and/or granules have an average length of between 1 mm and 50 mm.

9. The culture medium of any of the previous claims, wherein the fibers and/or granules have an average width of between 1 mm and 4 mm.

10. The culture medium of any of the previous claims, wherein the fibers and/or granules have an average length of between 1 mm and 5 mm, between 5 mm and 35 mm, or between 20 mm and 50 mm.

11. The culture medium of any of the previous claims, wherein the thickness of the side wall of the container is between 1.5 mm and 20 mm.

12. The culture medium of any of the previous claims, wherein the growth substrate is a loose material, such as soil or peat.

13. The culture medium of any of the previous claims, wherein the culture medium is filled with the growth substrate and a plant or a plant seed.

14. The culture medium of claim 6, wherein the fibers and/or granules are comprised of a material of a type which does not soften when soaked in water, such as pressed carton granules, wood fibers, coconut fibers or bark granules, preferably pine bark granules.

15. The culture medium of claim 11, wherein the thickness of the side wall is between 10 mm and 20 mm.
